# EUROPÄISCHE PATENTSCHRIFT

(11) **EP 1 176 073 B1**
(45) Veröffentlichungstag und Bekanntmachung des Hinweises auf die Patenterteilung: **28.02.2007**
(21) Anmeldenummer: 01117807.6
(22) Anmeldetag: 21.07.2001
(51) Int. Cl.: B60T 1/087, B60T 10/02

(54) **Verfahren zur Begrenzung der Bremsleistung eines Retarders**
Method for limitation of the braking power of a retarder
Procédé pour limitation de la performance de freinage d'un relantisseur

(30) Priorität: 27.07.2000 DE 10036517
(43) Veröffentlichungstag der Anmeldung: 30.01.2002
(73) Patentinhaber: ZF FRIEDRICHSHAFEN Aktiengesellschaft, 88038 Friedrichshafen (DE)
(72) Erfinder: Reisch, Bernhard, 88316 Isny (DE); Schmidtner, Peter, 88131 Lindau (DE)

(56) Entgegenhaltungen:
- EP-A- 0 873 926
- DE-A- 4 136 759
- DE-C- 19 848 546

## Beschreibung

Die vorliegende Erfindung betrifft ein Verfahren zur Begrenzung der Bremsleistung eines Retarders einer Bremsanlage für ein Kraftfahrzeug als Funktion der Temperatur des Kühlmittels nach dem Oberbegriff des Anspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit im Gefälle zu verringern oder konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Die während des Bremsvorgangs vom Retarder erzeugte Wärme kann mit Hilfe eines Kühlmediums eines Kühlsystems abgeführt und über einen Kühler eines Kühlsystems an die Umgebung abgegeben werden. Für Fahrzeuge mit Verbrennungsmotor kann als Kühlsystem für den Retarder das Motorkühlsystem des Fahrzeugs herangezogen werden. Hierbei muß dafür Sorge getragen werden, dass das Leistungsvermögen des Kühlsystems nicht überschritten wird, sodass keine Motorschäden wegen Überhitzung auftreten.

Eine Möglichkeit, eine Überhitzung des Motorkühlsystems zu verhindern, besteht darin, die Temperatur im Kühlsystem ständig zu überwachen und bei Überschreiten einer vorgegebenen Temperatur das Bremsmoment des Retarders zu begrenzen bzw. zu regeln. Im Falle eines hydrodynamischen Retarders kann dies durch einen Sensor erfolgen, der die Temperatur des Kühlmediums des Kühlsystems ständig mißt, wobei die elektronische Steuerung automatisch das Bremsmoment reduziert, so daß ein vorgegebener Maximalwert nicht überschritten wird.

Ein Verfahren zur geregelten Begrenzung der Bremswirkung eines Retarders ist aus der EPA 873 925 bekannt. Bei diesem bekannten Regelverfahren wird die während des Bremsens erzeugte Wärme mit Hilfe des Kühlmittels des Kühlsystems abgeführt, wobei die Begrenzung der Bremswirkung nach Erreichen einer vorbestimmten Temperatur einsetzt; diese vorbestimmte Temperatur wird in Abhängigkeit vom zeitlichen Temperaturverlauf des Kühlmediums und/oder des Arbeitsmediums des Retarders gewählt als Funktion des Temperaturgradienten, der als Maß für das Einsetzen der Regelung herangezogen wird. Bei diesem Verfahren wird also die Temperatur, bei der die Regelung einsetzt, in Abhängigkeit vom Temperaturgradienten gesetzt, um so die Trägheit des Kühlsystems bei Einsetzen der Regelung berücksichtigen zu können. Damit wird erreicht, dass bei steil ansteigendem Temperaturverlauf die Regelung bei niedrigeren Temperaturwerten als bei nur langsam ansteigender Temperatur einsetzen muß. Mit diesem bekannten Verfahren wird die Rückregelkurve verschoben, wodurch sich ein anderer Rückregelbeginn ergibt und eine unterschiedliche maximale Kühlmitteltemperatur.

Ein Verfahren zur Begrenzung der Bremsleistung eines Retarders mit den Merkmalen des Oberbegriffes von Anspruch 1 ist aus der EP 0 873 926 A2 bekannt.

Aufgabe der vorliegenden Erfindung ist es, ein Verfahren zur Begrenzung der Bremsleistung eines Retarders einer Bremsanlage für ein Kraftfahrzeug in Abhängigkeit von der Kühlmitteltemperatur vorzuschlagen, mit dem die Kapazität des Kühlsystems des Fahrzeugs maximal ausgenutzt werden kann und mit dem eine Kenngröße für das Kühlsystem des Fahrzeugs ermittelt werden kann, die zur langfristigen Veränderung der Rückregelkurve herangezogen werden kann, sodass diese den jeweiligen Bedingungen angepaßt werden kann.

Ausgehend von einem Verfahren der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Die Erfindung sieht also vor, dass bei Auftreten und Feststellen einer konstanten Temperatur des Kühlmittels im Kühlsystem des Fahrzeugs während einer vorgegebenen Zeitdauer nach Ablauf dieser vorgegebenen Zeitdauer die maximal zulässige Temperatur mit der aktuellen Temperatur des Kühlmittels verglichen wird, und dass bei einem festgestellten Differenzwert die zulässige Bremsleistung des Retarders um einen als Funktion dieses Differenzwertes errechneten Betrag verändert wird. Vorteilhaft wird die Feststellung der Temperatur, der Vergleich und die Veränderung der Bremsleistung nur während stattfindender Bremsvorgänge durchgeführt.

Besonders vorteilhaft ist es, wenn die Schritte der Feststellung des Differenzwertes und der Bremsleistungsveränderung des Retarders zyklisch durchlaufen werden, bis zum Erreichen eines vorgegebenen an die maximal zulässige Temperatur angenäherten Schwellwertes. Das Durchlaufen der zyklischen Schritte kann auch über das Erreichen des Schwellwertes hinaus ausgedehnt werden, um jederzeit schnell auf Veränderungen reagieren zu können.

Zusätzlich zur herkömmlichen Bremsleistungsbegrenzung als Funktion der Kühlmitteltemperatur wird erfindungsgemäß also bei Erkennen einer Beharrungstemperatur, d. h. einer Temperatur, bei der in einem definierten Zeitrahmen keine Änderung der Kühlmitteltemperatur auftritt, ein Vergleich zwischen der maximal zulässigen und der aktuellen Kühlwerttemperatur durchgeführt. Entsprechend der Differenz zwischen dem Sollwert und dem Istwert wird die zulässige Bremsleistung um einen entsprechend errechneten Betrag verändert. Diese Bremsleistungsveränderung wird zyklisch durchlaufen, um so einer Annäherung an die maximal zulässige Temperatur unter Berücksichtigung der aktuellen Umwelt- und Fahrzeugparameter, wie z. B. Kühlmittelumlaufmenge, Außentemperatur, Bremsleistung bei Beginn der Bremsung, Kühlkapazität des Fahrzeugkühlers, Lüfter, Thermostatöffnungstemperatur etc. zu erhalten.

Der Regler kann eine variable Schrittweite aufweisen und die Rückregelkurve verschieben anstelle des Knickpunktes der Rückregelkurve. Damit ist eine kurzfristige Adaption an das verwendete Kühlsystem im aktuellen Betriebspunkt möglich, sowie eine Langzeitadaption an die unterschiedlichen Kühlsysteme der Fahrzeuge durch Optimierung der Einstiegsbedingungen.

Ein wesentlicher Vorteil ist darin zu sehen, dass unabhangig von den oben aufgezählten Fahrzeugparametern das Kühlsystem maximal ausgenutzt werden kann. Durch die Ermittlung der maximal zulässigen Bremsleistung im Beharrungspunkt ergibt sich eine Kenngröße für das Kühlsystem des Fahrzeugs. Mit dieser Kenngröße kann die Rückregelkurve langfristig verändert und an die jeweiligen Bedingungen angepaßt werden (Sommer, Winter, schlechtes Kühlsystem, gutes Kühlsystem).

Durch ein geeignetes Verfahren zur Ermittlung des durch die Veränderung der Bremsleistung bewirkten Energieeintrags in das Kühlsystem sind Rückschlüsse möglich, um den Verlauf der Rückregelkurve an das Kühlsystem des Fahrzeugs anzupassen.

Ein geeignetes Verfahren zur Ermittlung dieses Energieeintrags ist z. B. die Ermittlung der Art der Bremsung unter Berücksichtigung der vorliegenden Fahrzeugparameter oder aber unter Berücksichtigung von berechneten oder gemessenen Fahrzeuggrößen. Über eine Klassifizierung der Bremsungen kann dann eine Anpassung der Rückregelstrategie erfolgen.

Dies bedeutet, dass bereits zu Beginn einer neuen Bremsung bereits von einem höheren oder von einem niedrigeren Niveau ausgegangen werden kann.

Alternativ kann aus modellierten Größen, beispielsweise Arbeit pro Zeiteinheit, die Rückregelkurve im Vorfeld angepaßt werden.

## Patentansprüche

1. Verfahren zur Begrenzung der Bremsleistung eines Retarders einer Bremsanlage für ein Kraftfahrzeug als Funktion der Temperatur des Kühlmittels, wobei die Bremsleistung des Retarders derart geregelt wird, dass eine vorgegebene maximal zulässige Temperatur des Kühlmittels nicht überschritten wird, **dadurch gekennzeichnet, dass** bei Auftreten und Feststellen einer konstanten Temperatur des Kühlmittels während einer vorgegebenen Zeitdauer nach Ablauf dieser vorgegebenen Zeitdauer die maximal zulässige Temperatur mit der aktuellen Temperatur des Kühlmittels verglichen wird und dass bei einem festgestellten Differenzwert die zulässige Bremsleistung des Retarders um einen als Funktion des Differenzwertes errechneten Betrag verändert wird.

2. Verfahren nach Anspruch 1, **dadurch gekennzeichnet, daß** die Feststellung der Temperatur, der Vergleich der Temperaturen und die Veränderung der Bremsleistung nur durchgeführt werden, während Bremsvorgänge stattfinden.

3. Verfahren nach Anspruch 1 oder 2, **dadurch gekennzeichnet, dass** die Schritte der Feststellung des Differenzwertes und der Bremsleistungsveränderung im Retarder zyklisch durchlaufen werden.

4. Verfahren nach einem der Ansprüche 1 bis 3, **dadurch gekennzeichnet, dass** zur Anpassung der Rückregelkurve für die Bremsleistung der durch die Veränderung der Bremsleistung bewirkte Energieeintrag in das Kühlsystem gemessen wird.

5. Verfahren nach Anspruch 4, **dadurch gekennzeichnet, dass** die Feststellung des Energieeintrags durch Ermittlung der Art der Bremsung als Funktion bestimmter gemessener Fahrzeugparameter erfolgt.

6. Verfahren nach Anspruch 4, **dadurch gekennzeichnet, dass** die Feststellung des Energieeintrags durch Ermittlung der Art der Bremsung als Funktion bestimmter berechneter Fahrzeugparameter erfolgt.

## Claims

1. The invention relates to a method for the limitation of the brake power of the retarder of a brake system for a motor vehicle as a function of the temperature of the coolant, with the brake power of the retarder being controlled in such a way that a specified maximally permitted temperature of the coolant is not exceeded, **characterized in that** occurrence and recognition of a constant temperature of the coolant during a specified period results in the maximally permitted temperature of the coolant being compared with the current coolant temperature after expiration of this specified period, and that if a differential value is determined, the permitted brake power of the retarder is altered by a value calculated as a function of the differential value.

2. A method according to claim 1, **characterized in that** temperature determination, comparison of temperatures and brake power alteration are only performed during braking.

3. A method according to claim 1 or 2, **characterized in that** these steps - determination of the differential value and brake power alteration in the retarder - are performed in a cyclic manner.

4. A method according to one of the claims 1 through 3, **characterized in that** the energy introduced into the cooling system due to alteration of the brake power is measured for adjustment of the resetting curve for the brake power.

5. A method according to claim 4, **characterized in that** determination of the energy input is performed through determination of the type of braking as a function of specific measured vehicle parameters.

6. A method according to claim 4, **characterized in that** determination of the energy input is performed through determination of the type of braking as a function of specific calculated vehicle parameters.

## Revendications

1. Méthode de limitation de la puissance de freinage d'un ralentisseur d'un système de freinage d'un véhicule automobile en fonction de la température du liquide de refroidissement, sachant que la puissance de freinage du ralentisseur est réglée de telle manière qu'une température maxi. admissible du liquide de refroidissement ne soit pas dépassée, **caractérisée en ce que** en cas de présence et de détection d'une température constante du liquide de refroidissement pendant une durée prédéterminée, à l'issue de ce temps prédéterminé la température maxi. admissible est comparée avec la température actuelle du liquide de refroidissement et **en ce que**, en cas de décèlement d'une valeur différentielle, la puissance de freinage maxi. admissible du ralentisseur est modifiée d'une valeur calculée en fonction de la valeur différentielle.

2. Méthode selon la revendication 1, **caractérisée en ce que** la détermination de la température, la comparaison des températures et la variation de la puissance de freinage ne peuvent être effectuées que pendant les freinages.

3. Méthode selon la revendication 1 ou 2, **caractérisée en ce que** les phases de détermination de la valeur différentielle et de la variation de la puissance de freinage dans le ralentisseur sont parcourues cycliquement.

4. Méthode selon une des revendications 1 à 3, **caractérisée en ce que** pour l'adaptation de la courbe de régulation régressive de la puissance de freinage est mesurée l'application d'énergie dans le système de refroidissement entraînée par la variation de la puissance de freinage.

5. Méthode selon la revendication 4, **caractérisée en ce que** la détermination de l'énergie appliquée est effectuée par la détermination du type de freinage et en fonction de certains paramètres de véhicule mesurés.

6. Méthode selon la revendication 4, **caractérisée en ce que** la détermination de l'énergie appliquée est effectuée par la détermination du type de freinage et en fonction de certains paramètres de véhicule calculés.
